(19) Europäisches Patentamt / European Patent Office / Office européen des brevets

(11) **EP 3 610 409 B1**

(12) **EUROPÄISCHE PATENTSCHRIFT**

(45) Veröffentlichungstag und Bekanntmachung des Hinweises auf die Patenterteilung:
**05.08.2020 Patentblatt 2020/32**

(51) Int Cl.:
***G06K 7/14*** *(2006.01)*     ***G06K 19/06*** *(2006.01)*

(21) Anmeldenummer: **18715707.8**

(86) Internationale Anmeldenummer:
**PCT/EP2018/058768**

(22) Anmeldetag: **05.04.2018**

(87) Internationale Veröffentlichungsnummer:
**WO 2018/189033 (18.10.2018 Gazette 2018/42)**

(54) **VERFAHREN ZUR HERSTELLUNG EINES SICHERHEITSMERKMALS UND ZUR AUTHENTIFIZIERUNG EINES SICHERHEITSMERKMALS SOWIE EIN SICHERHEITSMERKMAL**

METHOD FOR PRODUCING A SECURITY FEATURE AND FOR AUTHENTICATING A SECURITY FEATURE, AND A SECURITY FEATURE

PROCÉDÉ SERVANT À FABRIQUER UNE CARACTÉRISTIQUE DE SÉCURITÉ ET SERVANT À AUTHENTIFIER UNE CARACTÉRISTIQUE DE SÉCURITÉ, ET CARACTÉRISTIQUE DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.04.2017 DE 102017206467**

(43) Veröffentlichungstag der Anmeldung:
**19.02.2020 Patentblatt 2020/08**

(73) Patentinhaber: **tesa scribos GmbH**
**69126 Heidelberg (DE)**

(72) Erfinder:
- **AULBACH, Dr. Jochen**
  **Heidelberg 69124 (DE)**
- **BORGSMÜLLER, Dr. Stefan**
  **69126 Heidelberg (DE)**
- **SCHULTE-WIEKING, Dr. Kay**
  **69115 Heidelberg (DE)**

(56) Entgegenhaltungen:
**DE-A1- 19 806 295**    **DE-A1-102014 018 865**

- **ZHAO HONGJIE ET AL: "Double-image encryption using chaotic maps and nonlinear non-DC joint fractional Fourier transform correlator", OPTICAL ENGINEERING, SOC. OF PHOTO-OPTICAL INSTRUMENTATION ENGINEERS, BELLINGHAM, Bd. 55, Nr. 9, 1. September 2016 (2016-09-01), Seite 93109, XP060075589, ISSN: 0091-3286, DOI: 10.1117/1.OE.55.9.093109 [gefunden am 2016-09-30]**

**Beschreibung**

Die Erfindung betrifft ein Verfahren zur Herstellung eines Sicherheitsmerkmals. Die Erfindung betrifft auch ein Verfahren zur Authentifizierung eines gedruckten Sicherheitsmerkmals nach dem Anspruch 15 und dem Anspruch 23, und die Erfindung betrifft ein Sicherheitsmerkmal nach dem Oberbegriff des Anspruchs 26.

Aus der DE 198 06 295 A1 ist ein Zugangsberechtigungs- oder Identifikationsmedium mit einer Vorder- und einer Rückseite bekannt, das auf der Vorderseite ein Bild des Gesichtes einer Person trägt, wobei das Medium computergenerierte, holografische Informationen des Bildes in codierter Form speichert, indem die holografische Information als Beugungsmuster codiert gespeichert ist. Nachteiligerweise ist die Vervielfältigung des Sicherheitselementes durch Fotokopie möglich.

Aus der US 2010/0060944 A1 ist ein Verfahren zum Authentifizieren von Dokumenten bekannt, bei dem das Dokument eingescannt wird und dann Fourier-transformiert wird. Das Fourier-transformierte Bild wird mit der Fourier-Transformierten eines Masterprofils verglichen.

Die Konstruktion des Sicherheitselementes ist technisch aufwendig. Nachteiligerweise ist jedoch die Vervielfältigung des Sicherheitselementes durch Fotokopie möglich. Weiterhin nachteilig ist die Authentifizierung durch einen Bildvergleich, der entweder durch einen Menschen durchgeführt werden müsste oder im maschinellen Fall komplexe Bildverarbeitungsalgorithmen benötigen würde, die anfällig für Fehleinschätzungen sind. In der wissenschaftlichen Veröffentlichung von Zhao Hongjie et al: "Double-image encryption using chaotic maps and nonlinear non-DC joint fractional Fourier transform correlator", in Optical Engeneering, SOC of Photo-Optical Instrumentation Engeneers, Bd. 55, Nr. 9, Seite 93109 wird ein Verfahren beschrieben, bei dem mit chaotischen Abbildungsvorschriften und einem nichtlinearen, faktoriellen Fourier-Transformation-Korrelator, zwei Bilder in einem verschlüsselt werden.

Aus der DE 10 2014 018865 A1 ist ein Verfahren zur Authentisierung eines Benutzers gegenüber einer Authentisierungsstelle bekannt. Dabei werden mittels einer Kamera Bilder eines Identifikationsdokuments des Benutzers aufgenommen und über ein Übertragungsnetzwerk an die Authentisierungsstelle übertragen. Dabei weist das Identifikationsdokument ein Sicherheitsmerkmal zur Authentisierung auf, welches durch Beeinflussung des Benutzers seine Farbe verändert. Die Autorisierung erfordert durch eine Sprachverbindung, die über das Übertragungsnetzwerk hergestellt wird, um dem Benutzer durch die Authentisierungsstelle mitzuteilen, wann das Sicherheitsmerkmal zu beeinflussen ist.

Der Erfindung liegt daher die Aufgabe zugrunde, ein eingangs genanntes Verfahren zur Herstellung eines Sicherheitsmerkmals zu verbessern.

Der Erfindung liegt auch die Aufgabe zugrunde, Verfahren zur Authentifizierung eines gedruckten Sicherheitsmerkmals zur Verfügung zu stellen, und der Erfindung liegt in einem letzten Aspekt die Aufgabe zugrunde, ein schwer kopierbares Sicherheitsmerkmal zur Verfügung zu stellen.

Hinsichtlich des Verfahrens zur Herstellung eines Sicherheitsmerkmals wird die Aufgabe durch ein Verfahren mit den Verfahrensmerkmalen des Anspruchs 1 gelöst.

Das erfindungsgemäße Verfahren zur Herstellung eines Sicherheitsmerkmals geht davon aus, dass erste Informationen offen, also direkt lesbar und sichtbar und dass zweite Informationen verdeckt, d. h. verschlüsselt, also nicht direkt lesbar, aber sichtbar auf einem Produkt oder dessen Verpackung aufgebracht werden sollen. Die zweiten Informationen werden umgewandelt oder verschlüsselt und in dieser umgewandelten oder verschlüsselten Form auf dem Produkt oder dessen Verpackung aufgebracht. Bei den ersten und zweiten Informationen kann es sich um Seriennummern, Produktkennzeichen, Personenkennzeichen, Daten einer Datenbank oder Ähnliches handeln.

Die ersten Informationen werden als offener, maschinell lesbarer, erster grafischer Code zur Verfügung gestellt. Bei dem ersten Code kann es sich um einen 1D- oder 2D-Barcode oder einen QR-Code handeln, jedoch wird dieser nicht weiter umgewandelt, sondern in Codeform als erstes Bild zur Verfügung gestellt.

Die zweiten Informationen werden in wenigstens einem weiteren, maschinell lesbaren, grafischen Code, bspw. einem 1D-Barcode oder 2D-Barcode oder QR-Code, zur Verfügung gestellt. Die Informationen sind in dem wenigstens einen weiteren Code zwar codiert, jedoch wäre die Reproduktion des Codes durch Abfotografieren oder Fotokopieren leicht möglich. Er wird daher umgewandelt oder nochmals codiert.

Der wenigstens eine weitere Code wird in einer reellen Amplitudenfunktion einer zweidimensionalen, diskreten, komplexen Funktion $G(f_x, f_y)$ mit einer $f_x$-Frequenzkoordinate und einer $f_y$-Frequenzkoordinate eingebettet. Grundsätzlich können komplexe Zahlen oder komplexe Funktionen als Summe des Real- und Imaginärteils bzw. einer reellen Funktion und einer imaginären Funktion oder auch in Polarkoordinatenschreibweise als Amplitudenfunktion und Phasenfunktion dargestellt werden. Das erfindungsgemäße Verfahren geht davon aus, den wenigstens einen weiteren Code als Amplitudenfunktion einer zweidimensionalen, diskreten, komplexen Funktion $G(f_x, f_y)$ zur Verfügung zu stellen. Die Amplitudenfunktion hat bevorzugt über die zwei Frequenzkoordinaten $f_x$ und $f_y$ entweder den Funktionswert 0 oder den Funktionswert 1.

Die zweidimensionale, diskrete, komplexe Funktion $G(f_x, f_y)$, in die der wenigstens eine weitere Code eingebettet ist, kann zunächst weiterverarbeitet werden. Insbesondere kann der reellen Amplitudenfunktion eine Phasenfunktion hinzugefügt werden. Die Phasenfunktion hat die Aufgabe, das Frequenzspektrum der Amplitudenfunktion zu glätten. Vorzugsweise ist die Phasenfunktion eine Zufallsfunktion. Es können der reellen Amplitudenfunktion aber auch andere Funktionen hinzugefügt werden.

Die zweidimensionale, diskrete, komplexe Funktion G(fx,fy) wird dann Fourier-transformiert, und die daraus resultierende Fourier-Transformierte g(x,y) wird zu einem zweidimensionalen zweiten Bild binarisiert. Zur Binarisierung kann der Realteil der Fourier-Transformierten g(x,y) ermittelt werden und mittels eines Schwellenwertes binarisiert werden. Binarisierung eines Bildes bedeutet hier, dass jedem Pixel des Bildes entweder der Wert 1 oder der Wert 0 zugeordnet wird. Alternativ können auch der Realteil oder die Phase der Fourier-Transformierten g(x,y) ermittelt werden und mittels eines Schwellenwertes binarisiert werden. Weitere Binarisierungsmöglichkeiten sind aus dem Stand der Technik bekannt (Goodman, J. W., Introduction to Fourier Optics, McGraw-Hill (New York) (1996)).

Das erste Bild mit den ersten Informationen wird mit dem binarisierten zweiten Bild aus der Fourier-Transformierten g(x,y), verknüpft. Das erste und zweite Bild werden vorzugsweise in einer UND- Verknüpfung miteinander verknüpft. Erfindungsgemäß wird das zweidimensionale, verknüpfte Bild gedruckt.

Es hat sich gezeigt, dass an den Ausdruck des verknüpften Bildes hinsichtlich seiner Auflösung bestimmte Bedingungen gestellt werden müssen, damit das verknüpfte Bild durch eine weitere Fourier-Transformation auch wieder in den wenigstens einen weiteren Code verwandelt werden kann und der wenigstens eine weitere Code maschinell ausgelesen werden kann. Erfindungsgemäß werden entlang der Frequenzkoordinaten fx und fy jeweils eine maximal genutzte Frequenz fx_max und fy_max und jeweils eine maximal erreichbare Frequenz fx_limit und fy_limit bestimmt. Die maximal erreichbaren Frequenzen werden durch die Pixelanzahl MxN des Bereiches bestimmt, in dem der wenigstens eine weitere Code eingebettet ist.

Die maximal genutzten Frequenzen werden durch die tatsächliche Einbettung des wenigstens einen weiteren Codes in den zur Verfügung stehenden Rahmen bestimmt.

Entlang jeder der Koordinaten wird das Verhältnis Pfx und Pfy von maximal genutzter Frequenz zu maximal erreichbarer Frequenz bestimmt, und das verknüpfte, binarisierte Bild wird mit einer Pixelauflösung von mindestens dem kleineren Wert der beiden Werte $\frac{300\,DPI}{Pfx}$, $\frac{300\,DPI}{Pfy}$ gedruckt, und das verknüpfte, binarisierte Bild wird dann zumindest als Teil des Sicherheitsmerkmals verwendet.

Wenn das verknüpfte, binarisierte Bild mit der genannten Auflösung gedruckt wird, besteht ein Kopierschutz, d. h. das verknüpfte, binarisierte Bild wird so fein mit so vielen Details und Substrukturen gedruckt, dass ein herkömmliches Fotografieren und erneutes Ausdrucken üblicherweise so viel von der Struktur zerstört, dass eine Rekonstruktion des wenigstens einen weiteren Codes durch Fourier-Transformation nicht mehr möglich ist.

Vorzugsweise ist der wenigstens eine weitere Code aus wenigstens zwei jeweils separaten maschinell lesbaren Codes aufgebaut. Beispielsweise können zwei 1D- oder 2D-Barcodes oder QR-Codes oder Mischungen der vorgenannten Codes verwendet werden.

Besonders bevorzugt wird das verknüpfte, binarisierte Bild mit einer Pixelauflösung von mindestens dem kleineren Wert von $\frac{450\,DPI}{Pfx}$, $\frac{450\,DPI}{Pfy}$, vorzugsweise dem kleineren Wert von $\frac{600\,DPI}{Pfx}$, $\frac{600\,DPI}{Pfy}$, vorzugsweise $\frac{800\,DPI}{Pfx}$, $\frac{800\,DPI}{Pfy}$, besonders bevorzugt $\frac{1000\,DPI}{Pfx}$, $\frac{1000\,DPI}{Pfy}$, besonders bevorzugt durch den kleineren Wert von $\frac{1200\,DPI}{Pfx}$, $\frac{1200\,DPI}{Pfy}$ gedruckt.

Besonders bevorzugt wird für die Binarisierung ein Schwellenwert verwendet, der ein binarisiertes Bild mit 50 - 75 % weißen und 25 - 50 % schwarzen Pixeln erzeugt, es sind jedoch auch andere Binarisierungen mit beliebig anderen Schwellenwerten denkbar, insbesondere alle Schwellenwerte, die einen geringeren Anteil an zu druckenden schwarzen Pixeln ergeben, wie z. B. 40 % schwarze Pixel und 60 % weiße Pixel. Vorzugsweise werden auch 50 % schwarze und 50 % weiße Pixel gewählt. Das kann vorteilhaft sein, da Drucker meist größere Punkte drucken, als die Rastergröße des zugrundeliegenden Druckrasters vorgibt. Dadurch neigen Ausdrucke mit hoher Auflösung zum Zulaufen der schwarzen Punkte, wodurch Information verlorengeht. Dieser Effekt kann durch einen geeigneten Schwellenwert reduziert werden, indem der Anteil an zu druckenden Pixeln gesenkt wird. Der Schwellwert ist günstigerweise an den Druckvorgang angepasst.

Die bevorzugte UND-Verknüpfung des ersten und zweiten Bildes macht von der Eigenschaft der Fourier-Transformierten Gebrauch, und zwar in der Weise, dass die Information über eine große Fläche gleichmäßig verteilt ist und das Ausschneiden einer geometrischen Form der Rekonstruktion des wenigstens einen weiteren Codes keinen Abbruch tut. Die UND-Verknüpfung beruht darauf, dass das erste Bild und das zweite Bild zunächst auf eine gleiche Größe gebracht werden. Sollte das zweite Bild nicht die Größe des ersten Bildes haben, kann durch beliebiges Vervielfachen des zweiten Bildes in die x-und y-Richtung die Größe des ersten Bildes erreicht werden. Dann werden die beiden Bilder übereinandergelegt, und an den Stellen, an denen das erste Bild schwarz ist, wird der tatsächliche Wert des zweiten Bildes benutzt, während an den Stellen, wo das erste Bild weiß ist, dem zweiten Bild, unabhängig davon, ob es selbst schwarz oder weiß ist, der Wert weiß zugeordnet wird. Dadurch erhält das verknüpfte Bild die Struktur des binarisierten Bildes, das gleichsam in den ersten Code eingebettet ist. Das verknüpfte, binarisierte Bild kann günstigerweise digital gedruckt werden, z. B. mittels eines Tintenstrahldruckers oder eines Laserdruckers. Die Herstellung des binarisierten Bildes ist damit sehr kostengünstig und einfach.

Das verknüpfte, binarisierte Bild ist vorzugsweise das Sicherheitsmerkmal selbst oder Teil eines größeren Sicherheitsmerkmals.

Vorzugsweise wird das verknüpfte, binarisierte Bild nicht in schwarz, grau, cyan, magenta oder gelb gedruckt, also in einer der üblichen Druckfarben, sondern vorzugsweise wird das verknüpfte, binarisierte Bild in rot, blau oder grün gedruckt. Dies erhöht den Schutz vor Kopien mit Office-Kopierern o. Ä. erheblich, da bei einer solchen Kopie die nicht übliche Druckfarbe aus anderen Farben zusammengesetzt werden müsste. Grün müsste z. B. aus Cyan und Gelb zusammengesetzt werden. Verschiedene Farben werden in gewöhnlichen Druckern in verschiedenen Druckvorgängen bzw. mit verschiedenen Druckköpfen gedruckt, wobei deutliche Passerfehler zwischen den Druckfarben auftreten können, die die Struktur soweit zerstören, dass die Kopie des Sicherheitsmerkmals nicht mehr lesbar ist.

In einer bevorzugten Ausführungsform der Erfindung wird der Fourier-Transformierten g(x,y) ein Phasenschlüssel hinzugefügt und der Realteil der verschlüsselten Fourier-Transformierten berechnet und der Phasenschlüssel gespeichert. Des Weiteren können Bereiche oder einzelne Pixel der Fourier-Transformierten g(x,y) miteinander verwürfelt werden und der Realteil der verwürfelten Fourier-Transformierten g(x,y) berechnet werden und die Verwürfelung gespeichert werden. Der Phasenschüssel bzw. die Verwürfelung muss vorteilhafterweise gespeichert werden. Sie wird zur Rekonstruktion des wenigstens einen weiteren Codes verwendet.

Vorzugsweise wird eine Serie von Sicherheitsmerkmalen nach jeweils einem der vorstehenden Verfahren hergestellt und jedem der Sicherheitsmerkmale eine serialisierte Information zugeordnet.

Vorzugsweise wird dem Sicherheitsmerkmal eine serialisierte Information zugeordnet Darunter ist zu verstehen, dass bei einer Serie von Sicherheitsmerkmalen jedem einzelnen Sicherheitsmerkmal ein individualisierter Code zugeordnet wird. Die individualisierten Codes sind unterschiedlich, vorzugsweise paarweise unterschiedlich.

Besonders bevorzugt wird als serialisierte Information eine Seriennummer oder mehrere Seriennummern und/oder Produktkennzeichen und/oder Personenkennzeichen und/oder eine URL verwendet. Die serialisierte Information kann in einer Datenbank gespeichert werden.

Vorzugsweise wird der erste Code mit einer URL und einer serialisierten Information versehen, und der wenigstens eine weitere Code enthält günstigerweise eine serialisierte Information.

Besonders bevorzugt werden die erste Information oder Teile der ersten Information mit der wenigstens einen weiteren Information oder Teilen der wenigstens einen weiteren Information so verknüpft, dass die Informationen voneinander ableitbar sind. Dadurch wird ein zusätzlicher Prüfmechanismus erzeugt.

Die Aufgabe wird in ihrem zweiten Aspekt hinsichtlich des Verfahrens zur Authentifizierung eines gedruckten Sicherheitsmerkmals durch ein Verfahren mit den Merkmalen des Anspruchs 15 gelöst.

Das gemäß den oben genannten Verfahrensschritte erzeugte Sicherheitsmerkmal muss authentifiziert werden können. Erfindungsgemäß wird zur Authentifizierung zunächst ein elektronisches Bild des Sicherheitsmerkmals aufgenommen, wobei das Sicherheitsmerkmal ein erfindungsgemäßes verknüpftes, binarisiertes Bild enthält. Das binarisierte Bild wird in eine komplexe Funktion g2(x,y) eingebettet, und die Funktion g2(x,y) wird in eine komplexe Funktion G2(fx,fy) Fouriertransformiert. Erfindungsgemäß wird auf die komplexe Funktion G2(fx, fy) ein Lesealgorithmus angewendet und die komplexe Funktion maschinell ausgelesen. Das Sicherheitsmerkmal wird vorzugsweise nur dann als authentisch bewertet, wenn der Lesealgorithmus wenigstens einen weiteren grafischen Code erkennt, und das Sicherheitsmerkmal wird als nicht authentisch bewertet, wenn der Lesealgorithmus keinen weiteren Code erkennt. Als wenigstens ein weiterer Code kann entweder ein eindimensionaler Barcode, ein zweidimensionaler Barcode oder ein QR-Code oder sonstiger Code vorgesehen sein. Der Lesealgorithmus ist auf den zu erwartenden wenigstens einen weiteren Code abgestimmt.

Wie bei der Erzeugung des Sicherheitsmerkmals offenbart, ist es erfindungsgemäß vorgesehen, das Sicherheitsmerkmal mit einer hohen Auflösung auszudrucken. Die Auflösung ist so hoch, dass bei einer Kopie mit einem üblichen Office-Kopierer die Substrukturen des Sicherheitsmerkmals, insbesondere die des verknüpften, binarisierten Bildes des Sicherheitsmerkmals, verlorengehen.

Bei dem erfindungsgemäßen Verfahren zur Authentifizierung führt das dann dazu, dass nach der Fourier-Transformation die komplexe Funktion G2(fx,fy) nicht mehr den wenigstens einen weiteren Code als Information enthält, zumindest nicht mehr in einem hinreichenden Maße enthält, um den wenigstens einen weiteren Code auslesen zu können. Es wird daher bspw. kein weiterer Code erkannt oder bei einer Mehrzahl von Codes, die aus einem zweiten, dritten oder vierten grafischen Code bestehen, werden bspw. nur der dritte und vierte oder nur der zweite und nicht der dritte und vierte grafische Code erkannt, wenn diese höheren Frequenzen zugeordnet sind. Somit kann vorzugsweise der Tatsache Rechnung getragen werden, dass in bestimmten Gebieten zur Authentifizierung Mobilfunkgeräte verwendet werden, die eine geringere Kameraauflösung besitzen, so dass hier zur Authentifizierung lediglich die Information des zweiten grafischen Codes und nicht mehr die des dritten und vierten grafischen Codes gefordert wird.

Die im Sicherheitsmerkmal implementierten weiteren Codes aktivieren bevorzugt aus dem Stand der Technik bekannte Fehlerkorrekturmechanismen. In einer bevorzugten Ausführungsform des erfindungsgemäßen Verfahrens zur Authentifizierung wird ermittelt, in welchem Maße die Fehlerkorrektur bei der Entschlüsselung des Codes in Anspruch genommen wird, was wiederum ein Maß darstellt, wie vollständig die weiteren Codes in der komplexen Funktion G2(fx,fy) enthalten sind. In Kombination mit der Verwendung mehrerer weiterer Codes, wie im vorigen Absatz beschrieben, ermöglicht die Ermittlung der verwendeten Fehlerkorrektur eine noch feinere Bewertungsmöglichkeit des Sicherheitsmerkmals.

Vorzugsweise entschlüsselt der Lesealgorithmus auf die komplexe Funktion G2(fx,fy) wenigstens einen oder mehrere weitere grafische Codes erfolgreich, und es wird für die Entschlüsselung des jeweiligen Codes eine benötigte Fehlerkorrektur bestimmt, und eine Bedingung für eine Bewertung des Sicherheitsmerkmals als authentisch ist, dass die benötigen Fehlerkorrekturen einen bestimmten Schwellenwert nicht überschreiten.

Vorzugsweise kann das Authentifizieren des gedruckten maschinell lesbaren Sicherheitsmerkmals durch internetfähige mobile Endgeräte durchgeführt werden, die eine integrierte Kamera, einen Lesealgorithmus, bspw. eine Barcode-Leseapplikation, einen Internetzugang und einen Internetbrowser und eine Bildaufnahmeapplikation aufweisen. Dabei handelt es sich vorzugsweise um herkömmliche Applikationen.

Günstigerweise werden Informationen über das mobile Endgerät ermittelt, und es werden Bedingungen für die Bewertung des Sicherheitsmerkmals als authentisch abhängig von den Informationen bestimmt. Vorzugsweise handelt es sich bei den Informationen über das mobile Endgerät um die Leistungsfähigkeit, insbesondere das Auflösungsvermögen der Kamera.

Vorzugsweise werden Informationen über die Umstände der Authentifizierung ermittelt, und die Bedingungen für die Bewertung des Sicherheitsmerkmals als authentisch werden abhängig von den Informationen bestimmt. In diesem Ausführungsbeispiel kann es sich bei den Informationen über die Umstände um einen Ort handeln.

Besonders bevorzugt werden während des Verfahrens zur Authentifizierung ermittelte Daten in der Datenbank gespeichert und zur Einstufung des Sicherheitsmerkmals in einem späteren Verfahren genutzt.

Vorzugsweise wird Information aus einer Dekodierung des offenen ersten grafischen Codes für eine Dekodierung des wenigstens einen weiteren grafischen Codes genutzt. Dabei kann es sich insbesondere um die Position, die Orientierung und die Größe des ersten grafischen Codes in dem elektronischen Bild des Sicherheitsmerkmals handeln.

Die ausgelesenen Daten aus dem offenen ersten Code und die ausgelesenen Daten aus mindestens einem weiteren Code können auf eine gültige Verknüpfung geprüft werden, und die gültige Verknüpfung kann eine Bedingung für die Bewertung des Sicherheitsmerkmals als authentisch sein.

Die Aufgabe wird auch durch ein Verfahren mit den Merkmalen des Anspruchs 23 erfüllt.

Vorzugsweise ist ein Programm zur Durchführung der Umwandlung des verknüpften, binarisierten Bildes in den wenigstens einen weiteren Code auf einem Webserver abgelegt. Zur Umwandlung des verknüpften, binarisierten Bildes wird daher günstigerweise eine Internetverbindung zwischen dem mobilen Endgerät und dem Webserver hergestellt. Das Programm kann auf das mobile Endgerät heruntergeladen werden, oder das aufgenommene Bild kann vollständig oder teilweise über eine Webseite auf den Webserver hochgeladen werden.

Besonders bevorzugt kann es vorgesehen sein, dass in dem ersten Code, der in dem verknüpften Bild gespeichert ist, eine URL einer Webseite für eine Verbindung zu dem Programm gespeichert ist und beim Aufnehmen des verknüpften, binarisierten Bildes durch einen entsprechenden Lesealgorithmus zunächst der erste Code gelesen wird und eine Verbindung zur in dem ersten Code gespeicherten Webseite hergestellt wird.

Günstigerweise kann das Programm der Webseite das auszuwertende Bild über die Schnittstelle zum Speichersystem des Endgerätes erhalten, wobei beim Bildimport über die Schnittstelle bevorzugt direkt eine Standardbildaufnahmeapplikation des Endgerätes initiiert wird. Der Bediener kann dabei dazu angeleitet werden, die bevorzugte Einstellung des Zooms oder ein Aktivieren des Blitzes vorzunehmen

Das Programm der Webseite kann das auszuwertende Bild aber auch über eine Kameraschnittstelle des Browsers erhalten.

Es kann jedoch auch vorgesehen sein, die Schritte zur Umwandlung des verknüpften, binarisierten Bildes in den wenigstens einen weiteren Code auf dem mobilen Endgerät vorzunehmen, wobei das Programm vom Webserver auf das mobile Endgerät heruntergeladen wird.

Das Verfahren wird insbesondere auf eines oder mehrere der oben genannten Sicherheitsmerkmale angewendet und vorzugsweise in Verbindung mit dem oben genannten Authentifizierungsverfahren durchgeführt.

Erfindungsgemäß wird wenigstens ein Bild eines Sicherheitsmerkmals maschinell ausgewertet wird, indem eine Authentifizierung mittels eines internetfähigen mobilen Endgeräts mit integrierter Kamera durchgeführt wird, mit der das wenigstens eine Bild des Sicherheitsmerkmals aufgenommen wird, ein Programm zu einer Anleitung eines Bedieners des mobilen Endgeräts und zur maschinellen Auswertung der Bildaufnahmen auf einem Webserver abgelegt wird, das Programm in Verarbeitungsschritte aufgeteilt wird, die auf dem Webserver durchgeführt werden und in Verarbeitungsschritte aufgeteilt wird, die auf dem mobilen Endgerät durchgeführt werden, eine Internetverbindung zwischen dem mobilen Endgerät und dem Webserver über eine Webseite hergestellt wird und der entsprechende Programmteil über die Webseite auf das mobile Endgerät geladen wird und das Programm in einem Internetbrowser des mobilen Endgeräts durchgeführt wird.

Vorzugsweise wird das Programm nicht auf dem mobilen Endgerät installiert.

Dadurch, dass das Programm in einem Internetbrowser des mobilen Endgeräts durchgeführt wird, muss das Programm nicht auf dem mobilen Endgerät installiert sein. Dies ist insbesondere vorteilhaft, wenn das Authentifizierungsverfahren weite Verbreitung finden soll, also z.B. von Konsumenten durchgeführt werden soll. Erfahrungsgemäß sind solche Nutzergruppen nicht bereit, Programme eigens auf ihrem mobilen Endgerät zu installieren, wodurch sie aus dem Stand der Technik bekannte Authentifizierungsverfahren nicht nutzen können.

Vorzugsweise enthält das Sicherheitsmerkmal einen offenen, maschinell lesbaren, ersten grafischen, welcher eine URL einer Website umfasst, über die eine Verbindung zum Webserver hergestellt wird.

Vorzugsweise erhält das Programm das Bild zur Auswertung, das mit einem lokal auf dem Endgerät installierten Bildaufnahmeprogramm aufgenommen wird, günstigerweise über eine Kameraschnittstelle des Internetbrowser des auf dem mobilen Endgerät installierten Bildaufnahmeprogramms.

Besonders bevorzugt beinhaltet der auf dem Endgerät ausgeführte Programmteil eine Anleitung des Bedieners des Endgeräts zur Bildaufnahme, beispielsweise eine Anleitung, in welchem Abstand das Bild aufzunehmen ist oder ob bestimmte Bildaufnahmeeinstellungen, wie z. B. ein Zoom oder Blitz, vorzunehmen sind.

Günstigerweise führt der auf dem mobilen Endgerät ausgeführte Programmteil eine Verarbeitung des Bildes durch, bevorzugt eine Ausschnittbildung des Bildes, eine Farbumwandlung. Besonders bevorzugt führt der Programmteil eine Fourier-Transformation des Bildes oder eines Teils des Bildes durch. Der auf dem mobilen Endgerät ausgeführte Programmteil kann auch eine Entschlüsselung von weiteren maschinell lesbaren Codes aus einer Fourier-Transformation des Bildes oder einem Teil des Bildes durchführen.

Das umgewandelte Bild wird an den Webserver übertragen und dem auf dem Webserver auszuführenden Programmteil zugeführt.

Hinsichtlich des Sicherheitsmerkmals wird die Aufgabe durch ein Sicherheitsmerkmal mit den Merkmalen des Anspruchs 26 gelöst.

Das erfindungsgemäße Sicherheitsmerkmal umfasst ein gedrucktes, zweidimensionales verknüpftes, binarisiertes Bild, das durch Binarisierung aus einer Fourier-Transformierten g(x,y) berechnet ist, die die Fourier-Transformierte einer zweidimensionalen, diskreten, komplexen Funktion G(fx,fy) mit einer fx-Frequenzkoordinate und einer fy-Frequenzkoordinate ist, in der wenigstens ein weiterer maschinell lesbarer grafischer Code eingebettet ist.

Dabei ist der wenigstens eine weitere Code in einer der oben beschriebenen Weisen vorzugsweise in eine Amplitudenfunktion eingebettet. Erfindungsgemäß ist das verknüpfte, binarisierte Bild mit einer Pixelauflösung von mindestens dem kleineren Wert der beiden Werte $\frac{300\,DPI}{Pfx}$, $\frac{300\,DPI}{Pfy}$ gedruckt, besonders bevorzugt mit dem kleineren Wert von $\frac{450\,DPI}{Pfx}$, $\frac{450\,DPI}{Pfy}$, vorzugsweise dem kleineren Wert von $\frac{600\,DPI}{Pfx}$, $\frac{600\,DPI}{Pfy}$, vorzugsweise $\frac{800\,DPI}{Pfx}$, $\frac{800\,DPI}{Pfy}$ besonders bevorzugt $\frac{1000\,DPI}{Pfx}$, $\frac{1000\,DPI}{Pfy}$, besonders bevorzugt mit dem kleineren Wert von $\frac{1200\,DPI}{Pfx}$, $\frac{1200\,DPI}{Pfy}$. Dabei werden die Verhältnisse Pfx und Pfy in einer der oben genannten Weisen bestimmt.

Günstigerweise sind entlang der beiden Frequenzkoordinaten fx, fy der Funktion G(fx,fy) jeweils eine maximal genutzte Frequenz fx_max und fy_max vorgesehen und jeweils eine maximal erreichbare Frequenz fx_limit und fy_limit. Entlang jeder Koordinate ist das Verhältnis $Pfx = \frac{fx\_max}{fx\_limit}$ sowie $Pfy = \frac{fy\_max}{fy\_limit}$ von maximal genutzter Frequenz und maximal erreichbarer Frequenz bestimmt. Der wenigstens eine weitere Code kann in der oben beschriebenen Weise Seriennummern, Produktkennzeichen, Personenkennzeichen oder Daten einer Datenbank o. Ä. enthalten, wobei dann die Daten mit dem Inhalt der Datenbank bei der Authentifizierung abgeglichen werden können.

Vorzugsweise sind die beschriebenen Sicherheitsmerkmale Teile einer Serie von Sicherheitsmerkmalen, wobei der grafische Code jedes Sicherheitsmerkmals eine serialisierte Information aufweist

Das Verfahren kann vorteilhaft weitergebildet werden, indem der erste grafische Code in eine reelle Amplitudenfunktion der diskreten, komplexen Funktion G(fx, fy) eingebettet wird.

Das Verfahren kann vorteilhaft weitergebildet werden, indem der Amplitudenfunktion eine Phasenfunktion hinzugefügt wird, die ein Frequenzspektrum der Amplitudenfunktion glättet.

Das Verfahren kann vorteilhaft weitergebildet werden, indem mindestens einer der weiteren Codes Fehlerkorrekturmechanismen nutzt.

Das Verfahren kann vorteilhaft weitergebildet werden, indem die erste Information oder Teile der ersten Information mit der wenigstens einen weiteren Information oder Teilen der wenigstens einen weiteren Information in den weiteren Codes so verknüpft werden, dass die Informationen voneinander ableitbar sind.

Das Verfahren kann vorteilhaft weitergebildet werden, indem das verknüpfte Bild mittels eines Laserdruckers oder Tintenstrahldruckers gedruckt.

Das Verfahren kann vorteilhaft weitergebildet werden, indem das verknüpfte Bild in rot, blau oder grün gedruckt wird.

Das Verfahren kann vorteilhaft weitergebildet werden, indem als serialisierte Information eine Seriennummer und/oder ein Produktkennzeichen und/oder ein Personenkennzeichen verwendet wird.

Das Verfahren kann vorteilhaft weitergebildet werden, indem die serialisierte Information in einer Datenbank gespeichert wird.

Das Verfahren kann vorteilhaft weitergebildet werden, indem das binarisierte Bild als Realteil einer komplexen Funktion g2(x, y) aufgefasst wird.

Das Verfahren kann vorteilhaft weitergebildet werden, indem der Lesealgorithmus auf eine Amplitudenfunktion der komplexen Funktion G2(fx,fy) angewendet wird.

Das Verfahren kann vorteilhaft weitergebildet werden, indem der Lesealgorithmus auf die komplexe Funktion G2(fx,fy) wenigstens einen oder mehrere weitere grafische Codes erfolgreich entschlüsselt und für die Entschlüsselung des jeweiligen Codes eine benötigte Fehlerkorrektur bestimmt wird und eine Bedingung für eine Bewertung des Sicherheitsmerkmals als authentisch ist, dass die benötigen Fehlerkorrekturen einen bestimmten Schwellenwert nicht überschreiten.

Das Verfahren kann vorteilhaft weitergebildet werden, indem während der Authentifizierung ermittelte Daten und aus den Codes ausgelesene Daten mit Daten einer Datenbank verglichen werden und das Ergebnis des Vergleichs zu einer Einstufung des Sicherheitsmerkmals als authentisch oder nicht authentisch herangezogen wird.

Das Verfahren kann vorteilhaft weitergebildet werden, indem die ausgelesenen Daten aus dem offenen ersten grafischen Code und die ausgelesenen Daten aus mindestens einem der weiteren Code auf eine gültige Verknüpfung geprüft werden und dass die gültige Verknüpfung eine Bedingung für die Bewertung des Sicherheitsmerkmals als authentisch ist.

Das Verfahren kann vorteilhaft weitergebildet werden, indem das Programm zur Authentifizierung ein Bild zur Auswertung erhält, welches mit einem lokal auf dem mobilen Endgerät installierten Bildaufnahmeprogramm aufgenommen wird.

Das Verfahren kann vorteilhaft weitergebildet werden, indem das Programm das Bild zur Auswertung über eine Kameraschnittstelle des auf dem mobilen Endgerät installierten Internetbrowsers erhält.

Das Verfahren kann vorteilhaft weitergebildet werden, indem der auf dem mobilen Endgerät ausgeführte Programmteil den Bediener des mobilen Endgeräts zur Bildaufnahme anleitet.

Das Verfahren kann vorteilhaft weitergebildet werden, indem der auf dem mobilen Endgerät ausgeführte Programmteil das Bild verarbeitet.

Das Verfahren kann vorteilhaft weitergebildet werden, indem das umgewandelte Bild an den Webserver übertragen wird und dem auf dem Webserver auszuführenden Programmteil zugeführt wird.

Die Serie kann vorteilhaft weitergebildet werden, indem die serialisierte Information eine Seriennummer und/oder ein Produktkennzeichen und/oder ein Personenkennzeichen umfasst.

Die Serie kann vorteilhaft weitergebildet werden, indem die serialisierte Information in einer Datenbank gespeichert ist.

Die Erfindung wird anhand verschiedener Ausführungsbeispiele in elf Figuren beschrieben. Dabei zeigen:

Fig. 1      zwei zweidimensionale Barcodes aufgefasst als Amplitudenfunktion einer komplexen Funktion G(fx,fy),

Fig. 2a     zwei zweidimensionale Barcodes,

Fig. 2b     ein binarisiertes Bild einer Funktion g(x,y) mit 50 % der Pixel in schwarz und 50 % der Pixel in weiß,

Fig. 3a     ein Foto eines binarisierten Bildes einer Funktion g(x,y),

Fig. 3b     eine Rekonstruktion eines Barcodes aus dem binarisierten Bild in Fig. 3a,

Fig. 4a     eine Fotokopie des binarisierten Bildes in Fig. 3a,

Fig. 4b     eine Rekonstruktion aus der Fotokopie des binarisierten Bildes in Fig. 4a,

Fig. 5a     eine Verknüpfung des binarisierten Bildes in Fig. 2b mit einem ersten zweidimensionalen Barcode,

Fig. 5b     eine Rekonstruktion des zweiten und dritten Barcodes,

Fig. 6a     ein Ausdruck des Bildes in Fig. 5a,

Fig. 6b     eine Rekonstruktion des zweiten und dritten Barcodes aus der Fotokopie des binarisierten Bildes in Fig. 6a.

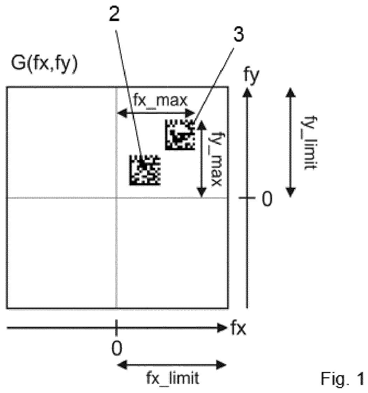

In Fig.1 sind zwei zweite Codes in Form von zwei 2D-Barcodes 2, 3 dargestellt. Die beiden Barcodes 2, 3 sind in einem Bild mit 256 x 256 Pixeln eingebettet.

Die zwei in Fig. 1 dargestellte 2D-Barcodes 2, 3 werden als Amplitudenfunktion einer diskreten, zweidimensionalen, komplexen Funktion G(fx,fy) mit MxN Pixeln aufgefasst. M bedeutet dabei die Anzahl der Pixel in fx-Richtung und N die Anzahl der Pixel in fy-Richtung. Die beiden Koordinaten fx und fy werden im Weiteren als Frequenzkoordinaten interpretiert. Das Zentrum der zweidimensionalen Funktion G(fx,fy) entspricht den beiden Frequenzen fx = fy = 0. Die Ränder der zweidimensionalen Funktion G(fx,fy) in der Fig. 1 in fx-Richtung und fy-Richtung entsprechen der maximal erreichbaren Frequenz in fx-Richtung und in fy-Richtung, die als fx_limit und fy_limit bezeichnet werden. Durch die Positionierung der beiden 2D-Barcodes 2, 3 in der Amplitude von G(fx,fy) ergibt sich eine maximal genutzte Frequenz in fx-Richtung und in fy-Richtung, die als fx_max bzw als fy_max bezeichnet werden. Das Verhältnis aus maximal genutzter Frequenz fx_max bzw. fy_max zu maximal erreichbarer Frequenz fx_limit bzw. fy_limit wird in fx-Richtung als $Pfx = \frac{\text{fx\_max}}{\text{fx\_limit}}$ und in fy-Richtung als

$Pfy = \frac{\text{fy\_max}}{\text{fy\_limit}}$ bezeichnet. Dieses Verhältnis ist immer ≤ 1. Wird einer der beiden 2D-Barcodes 2, 3 bis an die Ränder positioniert, so ist fx_max = fx_limit und fy_max = fy_limit und Pfx = 1 und Pfy = 1.

Die Werte der Amplitudenfunktion G(fx,fy) betragen 0 oder 1 und bilden durch entsprechende Zuordnung damit die beiden 2D-Barcodes 2, 3 in Fig. 1 ab. Das Verhältnis aus maximal genutzter Frequenz und maximal erreichbarer Frequenz ist in den Beispielen in Fig. 1 Pfx = 0,71 und Pfy = 0,71.

Der Amplitude der komplexen Funktion G(fx,fy) wird eine geeignete Phasenfunktion $e^{i\varphi(fx,fy)}$ zugefügt, um das Frequenzspektrum zu glätten. Bei der Phasenfunktion $e^{i\varphi(fx,fy)}$ kann es sich um eine Zufallsphase handeln, jedoch sind im Stand der Technik auch andere Phasenverteilungen bekannt.

Die komplexe Funktion G(fx, fy) wird Fouriertransformiert, wodurch eine weitere zweidimensionale komplexe Funktion mit MxN Pixeln die diskrete zweidimensionale Fourier-Transformierte g(x, y) entsteht.

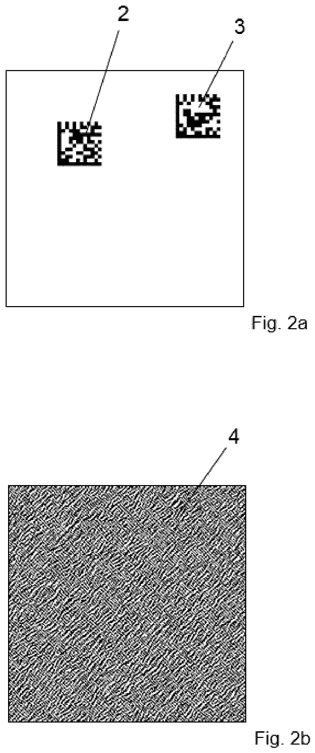

In Fig. 2a ist eine etwas andere Verteilung der beiden 2D-Barcodes 2, 3 in dem äußeren Rahmen von MxN Pixeln dargestellt. Die Fourier-Transformierte g(x,y) wird in ein binarisiertes Bild umgewandelt. Binarisierung bedeutet, dass jedem Pixel des Bildes der Fourier-Transformierten entweder ein Pixelwert 1 oder ein Pixelwert 2 zugeordnet ist. Hierbei wird z. B. "schwarz" als Pixelwert 1 und "weiß" als Pixelwert 2 verwendet. Es sind jedoch auch zwei unterschiedliche Grauwerte oder auch zwei verschiedene Farbwerte denkbar. Ein bevorzugtes Verfahren, das auch hier verwendet wird und dessen Ergebnis in Fig. 2b dargestellt ist, ist die direkte Binarisierung des Realteils der Fourier-Transformierten g(x,y). Hierbei wird ein Schwellenwert gewählt, und alle Werte des Realteils der Fourier-Transformierten g(x,y), die unterhalb des Schwellenwertes liegen, werden dem Pixelwert 1 zugeordnet und alle anderen Pixelwerte dem Pixelwert 2. Der Schwellenwert kann so gewählt werden, und dieses ist in der Fig. 2b geschehen, dass 50 % der Pixel den Pixelwert 1 und 50 % der Pixel den Pixelwert 2 zugeordnet bekommen haben. Der Schwellenwert kann aber auch so gewählt werden, dass jeder gewünschte andere Prozentsatz der Pixel den Pixelwert 1 bekommt und die restlichen Pixel den Pixelwert 2. Das durch Binarisierung erzeugte Bild 2b des Realteils der Fourier-Transformierten g(x,y) ist ein zweidimensionales, rechteckiges Pixelbild mit ebenfalls MxN Pixeln. Es sieht aus wie eine zufällige, ungefähr gleichverteilte Pixelverteilung. Das binarisierte Bild 2b ist zumindest Teil eines erfindungsgemäßen Sicherheitsmerkmals 4. Es kann auch selbst als Sicherheitsmerkmal 4 verwendet werden. Das binarisierte Bild 2b wird im nächsten Schritt mit hoher Auflösung gedruckt.

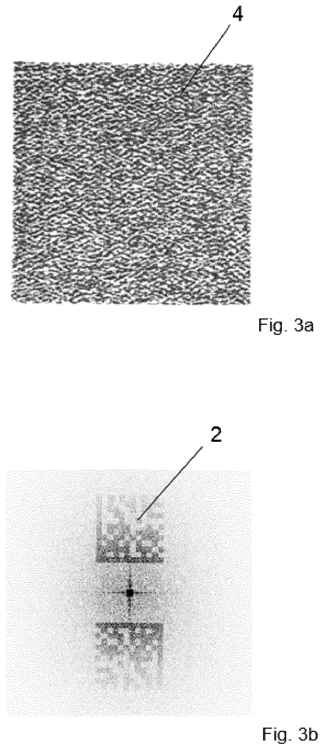

In der Fig. 3a ist ein vergrößerter Ausdruck des binarisierten Bildes gezeigt, das mit einem Laserdrucker angefertigt wurde. Die verwendete Druckauflösung beträgt in Fig. 3a 600 DPI. Dadurch erhält das Bild mit 256 Pixeln Kantenlänge eine reale Kantenlänge von ca. 10,84 mm.

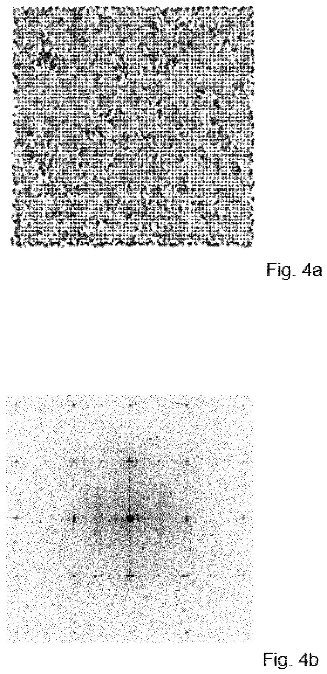

In der Fig. 3a ist das Sicherheitsmerkmal 4 in Form eines binarisierten Bildes eines 2D-Barcodes 2 gemäß Fig. 3b dargestellt. Der 2D-Barcode 2 der Fig. 3b entspricht nicht dem in der Fig. 1 dargestellten doppelten 2D-Barcode 2, 3. Jedoch zeigt ein Vergleich der Fig. 3a und 3b und der Fig. 4a, 4b den Kern der Erfindung. Fig. 3a ist ein binarisiertes Bild, das mit ebenfalls einer Druckauflösung von 600 DPI gedruckt wurde. Die Mindestauflösung des in Fig. 3b dargestellten 2D-Barcodes 2 beträgt in x-Richtung 1034 DPI und in y-Richtung 455 DPI. Somit ist die Bedingung durch die Druckauflösung von 600 DPI zumindest in y-Richtung erfüllt, und das führt dazu, dass das binarisierte Bild in Fig. 3a eine hinreichende Struktur enthält, um durch eine Fourier-Transformation, die in Fig. 3b dargestellt ist, den lesbaren 2D-Barcode 2 zu offenbaren.

Der Fig. 3b ist aber auch zu entnehmen, dass über das gesamte Bild ein gleichmäßiges Bildrauschen gelegt ist und insbesondere die Lesbarkeit zum Rand hin deutlich abfällt. Das ist darin begründet, dass selbst bei einem hochauflösenden Ausdruck der Fig. 3a insbesondere die ganz feinen Strukturen, die mit hohen Frequenzen des 2D-Barcodes 2 korrespondieren, nicht in der gleichen Schärfe ausgedruckt werden wie die groben Strukturen und somit die Information zu den hohen Frequenzen fx, fy, also die Information zum Rand hin, im Fourier-transformierten Bild Fig. 3b verlorengehen.

In Fig. 4a ist eine Kopie des Bildes in Fig. 3a dargestellt, wobei die Kopie mit einem Office-Kopierer hergestellt wurde, der eine Nominalauflösung von 600 DPI besitzt. In Fig. 4a ist die Fotokopie dargestellt. Es ist erkennbar, dass das binarisierte Bild von einem Raster überlagert ist, und die feinen Strukturen, die noch in der Fig. 3a zu erkennen sind, fehlen. Das führt dazu, dass bei einer Fourier-Transformation, die in Fig. 4b dargestellt ist, der 2D-Barcode nicht mehr entziffert werden kann.

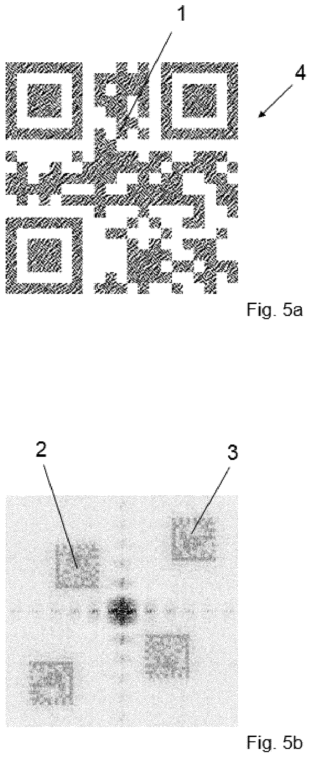

In Fig. 5a ist die logische UND-Verknüpfung des binarisierten Bildes der Fig. 2b und eines QR-Codes 1 dargestellt. Der QR-Code 1 ist hier als Beispiel eines ersten Codes 1, der genauso gut auch ein 2D-Barcode oder irgendein anderer flächiger, zweidimensionaler, maschinell lesbarer Code sein kann, gewählt.

Die Bildgröße des QR-Codes 1 entspricht der Bildgröße des binarisierten Bildes. Der QR-Code 1 besteht aus zwei Pixelwerten, nämlich schwarz und weiß, und die logische UND-Verknüpfung des QR-Codes 1 mit dem Bild in Fig. 2b beruht darauf, dass an den Stellen, an denen der QR-Code 1 den Wert schwarz hat, die Pixel aus dem binarisierten Bild gemäß Fig. 2b beibehalten werden, und an den Stellen, an denen der QR-Code 1 den Pixelwert weiß hat, werden die Pixel aus dem binarisierten Bild gemäß Fig. 2b nicht beibehalten, sondern ebenfalls auf weiß gesetzt. Die Verknüpfung entspricht einer logischen UND-Verknüpfung der beiden Bilder des QR-Codes 1 und der Fig. 2b. Die logische UND-Verknüpfung ist in Fig. 5a dargestellt.

Natürlich kann es sich bei dem ersten Code 1 auch um eine ganz andere geometrische Form wie einen Kreis oder ein Rechteck oder eine Seriennummer o. Ä. handeln. In Fig. 5b sind die aus dem verknüpften, binarisierten Bild der Fig. 5a durch Fourier-Transformation rekonstruierten zweiten und dritten 2D-Barcodes 2, 3 dargestellt.

In Fig. 5a werden einzelne Abschnitte und Bereiche aus dem Bild herausgenommen, die durch die Gestalt des QR-Codes 1 bestimmt sind. Die Erfindung macht von der Eigenschaft der Fourier-Transformation Gebrauch, und zwar in der Weise, dass die Information, die in der Fourier-Transformation gemäß Fig. 2b enthalten ist, über die gesamte Fläche des Bildes gleichmäßig verteilt ist, so dass durch Herausnahme einzelner Abschnitte und Bereiche trotzdem noch die Gesamtinformation vollständig erhalten ist, so dass die beide 2D-Barcodes 2, 3 gemäß Fig. 5b rekonstruiert werden können.

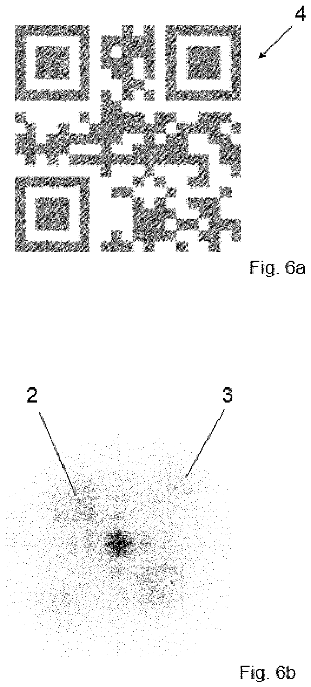

In Fig. 6a ist eine Fotokopie des Sicherheitsmerkmals 4 der Fig. 5a dargestellt. Es ist zu erkennen, dass insbesondere die feinen Strukturen der Fig. 5a verlorengegangen sind, eine Rekonstruktion des zweiten und dritten 2D-Barcodes 2, 3 aus dem Sicherheitsmerkmal 4 der Fig. 6a ist in Fig. 6b dargestellt. Es ist zu erkennen, dass insbesondere der dritte 2D-Barcode 3, der höheren Frequenzen und damit den feineren Strukturen in Fig. 6a zugeordnet ist, nicht mehr lesbar ist, sondern nur noch der zweite 2D-Barcode 2, der tieferen Frequenzen und damit gröberen Strukturen in der Fig. 6a zugeordnet ist. Hierbei wird deutlich, dass bei einer Anordnung von einem zweiten und dritten Code 2, 3 bei unterschiedlichen Frequenzen durch die Fourier-Transformation ein stufenartiges Authentifizierungssystem installiert werden kann. Beispielsweise kann bei einem originären Produkt, das mit einem originären Sicherheitsmerkmal 4 gemäß Fig. 5a gekennzeichnet ist, mit einer hochauflösenden Kamera ein hinreichend scharfes Bild gemacht werden, das dann durch entsprechende Fourier-Rücktransformation zu den zwei auslesbaren 2D-Barcodes 2, 3 gemäß Fig. 5b führt. Es kann jedoch auch sein, dass bei einem mobilen Endgerät mit einer nicht hinreichend hochauflösenden integrierten Kamera nur ein Bild gemäß Fig. 6a aufgenommen und dem Fourier-Transformations-Programm zugeführt wird. Dennoch könnte beispielsweise ein zweiter 2D-Barcode 2 gemäß Fig. 6b doch noch als echt identifiziert werden, wenn beispielsweise die Aufnahme oder Abfrage aus einem Gebiet stammt, in dem erfahrungsgemäß mobile Endgeräte mit geringerer Qualität, d. h. geringerwertigen integrieren Kameras verbreitet sind.

## Bezugszeichenliste

1  QR-Code
2  zweiter 2D-Barcode
3  dritter 2D-Barcode
4  Sicherheitsmerkmal

## Patentansprüche

1. Verfahren zur Herstellung eines Sicherheitsmerkmals (4),
indem
eine erste Information als offener, maschinell lesbarer, erster grafischer Code (1) zur Verfügung gestellt wird,
der erste grafische Code (1) als ein erstes Bild zur Verfügung gestellt wird, wenigstens eine weitere Information in wenigstens einem maschinell lesbaren weiteren grafischen Code (2, 3) zur Verfügung gestellt wird,
der wenigstens eine weitere grafische Code (2, 3) in eine zweidimensionale, diskrete, komplexe Funktion G(fx,fy) mit einer fx-Frequenzkoordinate und einer fy-Frequenzkoordinate eingebettet wird,
die zweidimensionale, diskrete, komplexe Funktion G(fx,fy) zu einer zweidimensionalen, diskreten, komplexen Funktion g(x,y) Fourier-transformiert wird,
und die Funktion g(x,y) zu einem zweiten Bild binarisiert wird und
das erste Bild und das zweite Bild miteinander verknüpft werden,
**dadurch gekennzeichnet, dass**
entlang beider Frequenzkoordinaten fx, fy jeweils eine maximal genutzte Frequenz fx_max, fy_max und jeweils eine maximal erreichbare Frequenz fx_limit, fy_limit bestimmt werden,
entlang jeder Koordinate ein Verhältnis

$$Pfx = \frac{fx\_max}{fx\_limit}, \quad Pfy = \frac{fy\_max}{fy\_limit}$$ von maximal genutzter Frequenz und maximal erreichbarer Frequenz bestimmt wird und
das verknüpfte Bild mit einer Pixelauflösung von mindestens dem kleineren Wert der beiden Werte

$$\frac{300\, DPI}{Pfx}, \quad \frac{300\, DPI}{Pfy}$$ gedruckt wird.

2. Verfahren nach Anspruch 1,
**dadurch gekennzeichnet, dass** das erste Bild mit dem zweiten Bild UND-verknüpft wird.

3. Verfahren nach einem der Ansprüche 1 oder 2,
**dadurch gekennzeichnet, dass** die zweidimensionale, diskrete Funktion G(fx, fy) Fourier-transformiert wird und ein Realteil einer Fourier-Transformierten g(x,y) der Funktion G(fx, fy) ermittelt wird, und der Realteil dann binarisiert wird.

4. Verfahren nach einem der vorstehenden Ansprüche,
**dadurch gekennzeichnet, dass** die weiteren Codes (2, 3) einzeln betrachtet mit unterschiedlichen Werten fx_max und fy_max versehen werden.

5. Verfahren nach einem der vorstehenden Ansprüche,
**dadurch gekennzeichnet, dass** das verknüpfte Bild mit einer Pixelauflösung von mindestens dem kleineren Wert von $\frac{450\, DPI}{Pfx}$, $\frac{450\, DPI}{Pfy}$ gedruckt wird.

6. Verfahren nach einem der vorstehenden Ansprüche,
**dadurch gekennzeichnet, dass** für die Binarisierung ein Schwellenwert verwendet wird, der an den Druckprozess angepasst ist.

7. Verfahren nach einem der vorstehenden Ansprüche,
**dadurch gekennzeichnet, dass** für die Binarisierung ein Schwellenwert verwendet wird, der ein binarisiertes Bild mit 50 - 75 % weißen und 25 - 50 % schwarzen Pixeln erzeugt.

8. Verfahren nach einem der vorstehenden Ansprüche,
**dadurch gekennzeichnet, dass** der Fourier-Transformierten g(x, y) ein Phasenschlüssel hinzugefügt wird und der Phasenschlüssel gespeichert wird.

9. Verfahren nach einem der vorstehenden Ansprüche,
**dadurch gekennzeichnet, dass** Bereiche und/oder einzelne Pixel der Fourier-Transformierten g(x, y) miteinander verwürfelt werden und die Verwürfelung gespeichert wird.

10. Verfahren nach einem der vorstehenden Ansprüche,
**dadurch gekennzeichnet, dass** das verknüpfte Bild digital gedruckt wird.

11. Verfahren nach einem der vorstehenden Ansprüche,
**dadurch gekennzeichnet, dass** das binarisierte Bild (2) nicht in schwarz, grau, cyan, magenta oder gelb gedruckt wird,

12. Verfahren zur Herstellung einer Serie von Sicherheitsmerkmalen nach jeweils einem der vorstehenden Ansprüche,
**dadurch gekennzeichnet, dass** jedem der Sicherheitsmerkmale eine serialisierte Information zugeordnet wird.

13. Verfahren nach Anspruch 12,
**dadurch gekennzeichnet, dass** der erste Code (1) mit einer URL und einer serialisierten Information versehen wird.

14. Verfahren nach einem der Ansprüche 12 oder 13,
**dadurch gekennzeichnet, dass** die weiteren Codes (2, 3) mit einer serialisierten Information versehen werden.

15. Verfahren zur Authentifizierung eines nach einem Verfahren gemäß Anspruch 1 hergestellten Sicherheitsmerkmals (4) mit
einem offenen, maschinell lesbaren, ersten grafischen Code (1) und einem damit verknüpften binarisierten Bild, indem
ein elektronisches Bild des Sicherheitsmerkmals (4) aufgenommen wird,
der offene, maschinell lesbare, erste graphische Code (1) dekodiert wird,
das verknüpfte, binarisierte Bild oder ein Ausschnitt dieses Bildes in eine komplexe Funktion g2(x,y) eingebettet wird,
die komplexe Funktion g2(x, y) in eine komplexe Funktion G2(fx,fy) Fourier-transformiert wird und ein Lesealgorithmus auf die komplexe Funktion G2(fx,fy) angewendet wird, und
das Sicherheitsmerkmal (4) als authentisch bewertet wird, wenn der Lesealgorithmus wenigstens einen weiteren grafischen Code (2, 3) entschlüsselt, und das Sicherheitsmerkmal (4) als nicht authentisch bewertet wird, wenn der Lesealgorithmus keinen weiteren Code (2, 3) entschlüsselt.

16. Verfahren nach Anspruch 15,
**dadurch gekennzeichnet, dass** ein zweiter Code (2) und ein dritter Code (3), welcher in einem höheren Frequenzbereich von G2(fx,fy) als Code (2) liegt, entschlüsselt werden und dem Sicherheitsmerkmal (4) eine höhere Sicherheit zugeordnet wird, wenn der dritte Code (3) entschlüsselt wird, als wenn nur der zweite Code (2) entschlüsselt wird.

17. Verfahren nach einem der Ansprüche 15 oder 16,
**dadurch gekennzeichnet, dass** Informationen über ein für das Verfahren zur Authentifizierung genutztes Endgerät ermittelt werden und dass die Bedingungen für die Bewertung des Sicherheitsmerkmals (4) als authentisch abhängig von den Informationen bestimmt werden.

18. Verfahren nach einem der Ansprüche 15 bis 17, **dadurch gekennzeichnet, dass** Informationen über die Umstände der Authentifizierung ermittelt werden und dass die Bedingungen für die Bewertung des Sicherheitsmerkmals (4) als authentisch abhängig von den Informationen bestimmt werden.

19. Verfahren nach einem der Ansprüche 15 bis 18,, **dadurch gekennzeichnet, dass** während des Verfahrens zur Authentifizierung ermittelte Daten in der Datenbank gespeichert werden und zur Einstufung von Sicherheitsmerkmalen (4) in einem späteren Verfahren genutzt werden können.

20. Verfahren nach einem der Ansprüche 15 bis 19, **dadurch gekennzeichnet, dass** erste Informationen aus einer Dekodierung des offenen ersten grafischen Codes (1) für eine Dekodierung der weiteren grafischen Codes (2, 3) genutzt werden.

21. Verfahren nach einem der Ansprüche 15 bis 20, **dadurch gekennzeichnet, dass** die Fourier-Transformierte g(x,y) mit einem inversen Phasenschlüssel versehen wird und dann Fourier-rücktransformiert wird.

22. Verfahren nach einem der Ansprüche 15 bis 21, **dadurch gekennzeichnet, dass** die Fourier-Transformierte g(x,y) rückverwürfelt wird und dann Fourier-rücktransformiert wird.

23. Verfahren nach Anspruch 15, **dadurch gekennzeichnet, dass** wenigstens ein Bild des Sicherheitsmerkmals (4) maschinell ausgewertet wird, wobei das Sicherheitsmerkmal (4) einen verdeckten, maschinell lesbaren, grafischen Code (2) enthält, die Authentifizierung mittels eines internetfähigen, mobilen Endgeräts mit integrierter Kamera durchgeführt wird, mit der das wenigstens eine Bild des Sicherheitsmerkmals (4) aufgenommen wird, ein Programm zu einer Anleitung eines Bedieners des mobilen Endgeräts und zur maschinellen Auswertung der Bildaufnahmen auf einem Webserver abgelegt wird, das Programm in Verarbeitungsschritte aufgeteilt wird, die auf dem Webserver durchgeführt werden und in Verarbeitungsschritte aufgeteilt wird, die auf dem mobilen Endgerät durchgeführt werden, eine Internetverbindung zwischen dem mobilen Endgerät und dem Webserver über eine Webseite hergestellt wird und der entsprechende Programmteil über die Webseite auf das mobile Endgerät geladen wird und das Programm in einem Internetbrowser des mobilen Endgeräts durchgeführt wird, **dadurch gekennzeichnet, dass** der auf dem mobilen Endgerät ausgeführte Programmteil eine Fourier-Transformation des Bildes oder eines Teils des Bildes durchführt, und der auf dem mobilen Endgerät ausgeführte Programmteil eine Entschlüsselung von weiteren maschinell lesbaren Codes (2, 3) aus einer Fourier-Transformation des Bildes oder eines Teils des Bildes durchführt.

24. Verfahren nach Anspruch 15 oder 23, **dadurch gekennzeichnet, dass** das Sicherheitsmerkmal (4) einen offenen, maschinell lesbaren, ersten grafischen Code (1) enthält, welcher eine URL einer Website umfasst, über die eine Verbindung zum Webserver hergestellt wird.

25. Verfahren nach Anspruch 15 oder 24, **dadurch gekennzeichnet, dass** das Sicherheitsmerkmal (4) gedruckt wird.

26. Sicherheitsmerkmal mit einem gedruckten, zweidimensionalen, binarisierten Bild, das ein erstes Bild eines offenen, maschinell lesbaren, ersten grafischen Codes (1)umfasst, das mit einem zweiten binarisierten Bild verknüpft ist, das durch Binarisierung aus einer Funktion g(x,y) berechnet ist, die die Fourier-Transformierte einer zweidimensionalen, diskreten, komplexen Funktion G(fx,fy) mit einer fx-Frequenzkoordinate und einer fy-Frequenzkoordinate ist, in der wenigstens ein weiterer maschinell lesbarer grafischer Code (2, 3) eingebettet ist, wobei entlang beider Frequenzkoordinaten fx, fy jeweils eine maximal genutzte Frequenz fx_max, fy_max und jeweils eine maximal erreichbare Frequenz fx_limit, fy_limit vorgesehen ist, **dadurch gekennzeichnet, dass**

entlang jeder Koordinate ein $\mathrm{Pfx} = \frac{fx\_max}{\mathrm{fx\_limit}}$,

$\mathrm{Pfy} = \frac{fy\_max}{\mathrm{fy\_limit}}$ von maximal genutzter Frequenz und maximal erreichbarer Frequenz bestimmt ist und das binarisierte Bild mit einer Pixelauflösung von mindestens dem kleineren Wert der beiden Werte $\frac{300\,DPI}{\mathrm{Pfx}}$, $\frac{300\,DPI}{\mathrm{Pfy}}$ gedruckt ist.

27. Sicherheitsmerkmal nach Anspruch 26, **dadurch gekennzeichnet, dass** das verknüpfte Bild mit einer Pixelauflösung von mindestens dem kleineren Wert von $\frac{450\,DPI}{\mathrm{Pfx}}$, $\frac{450\,DPI}{\mathrm{Pfy}}$ gedruckt ist.

28. Sicherheitsmerkmal nach Anspruch 26 oder 27, **dadurch gekennzeichnet, dass** das erste Bild mit dem zweiten Bild UND-verknüpft ist.

29. Serie von Sicherheitsmerkmalen nach einem der Ansprüche 26, 27 oder 28,
**dadurch gekennzeichnet, dass** der grafische Code jedes Sicherheitsmerkmals eine serialisierte Information aufweist.

## Claims

1. Method for producing a security feature (4),
by virtue of
a first information item being provided as an open, machine-readable, first graphical code (1),
the first graphical code (1) being provided as a first image,
at least one further information item being provided in at least one machine-readable further graphical code (2, 3),
the at least one further graphical code (2, 3) being embedded in a two-dimensional, discrete, complex function G(fx,fy) with an fx-frequency coordinate and an fy-frequency coordinate,
the two-dimensional, discrete, complex function G(fx,fy) being Fourier transformed into a two-dimensional, discrete, complex function g(x,y), and the function g(x,y) being binarized into a second image and
the first image and the second image being linked to one another,
**characterized in that**
a maximum used frequency fx_max, fy_max and a maximum achievable frequency fx_limit, fy_limit are respectively determined along both frequency coordinates fx, fy,

a ratio $Pfx = \frac{fx\_max}{fx\_limit}$,

$Pfy = \frac{fy\_max}{fy\_limit}$ of maximum used frequency
and maximum achievable frequency is determined along each coordinate and
the linked image is printed with a pixel resolution of at least the smaller value of the two values $\frac{300DPI}{Pfx}$,

$\frac{300DPI}{Pfy}$.

2. Method according to Claim 1,
**characterized in that** the first image is ANDed with the second image.

3. Method according to either of Claims 1 and 2,
**characterized in that** the two-dimensional, discrete function G(fx,fy) is Fourier transformed and a real part of a Fourier transform g(x,y) of the function G(fx,fy) is ascertained and the real part is then binarized.

4. Method according to any one of the preceding claims,

**characterized in that** the further codes (2, 3), when considered on their own, are provided with different values of fx_max and fy_max.

5. Method according to any one of the preceding claims,
**characterized in that** the linked image is printed with a pixel resolution of at least the smaller value

of $\frac{450DPI}{Pfx}$, $\frac{450DPI}{Pfy}$.

6. Method according to any one of the preceding claims,
**characterized in that** a threshold which is adapted to the printing process is used for the binarization.

7. Method according to any one of the preceding claims,
**characterized in that** a threshold is used for the binarization, said threshold generating a binarized image with 50-75% white pixels and 25-50% black pixels.

8. Method according to any one of the preceding claims,
**characterized in that** a phase key is added to the Fourier transform g(x,y) and the phase key is stored.

9. Method according to any one of the preceding claims,
**characterized in that** regions and/or individual pixels of the Fourier transform g(x,y) are scrambled with one another and the scrambling code is stored.

10. Method according to any one of the preceding claims,
**characterized in that** the linked image is digitally printed.

11. Method according to any one of the preceding claims,
**characterized in that** the binarized image (2) is not printed in black, grey, cyan, magenta or yellow.

12. Method for producing a series of security features according to respectively one of the preceding claims,
**characterized in that** a serialized information item is assigned to each of the security features.

13. Method according to Claim 12,
**characterized in that** the first code (1) is provided with a URL and a serialized information item.

**14.** Method according to either of Claims 12 and 13, **characterized in that** the further codes (2, 3) are provided with a serialized information item.

**15.** Method for authenticating a security feature (4) produced according to a method according to Claim 1 and including an open, machine-readable, first graphical code (1) and a binarized image linked therewith, by virtue of

a first electronic image of the security feature (4) being recorded,

the open, machine-readable, first graphical code (1) being decoded,

the linked, binarized image or a section of this image being embedded in a complex function g2(x,y), the complex function g2(x,y) being Fourier transformed into a complex function G2(fx,fy) and a reading algorithm being applied to the complex function G2(fx,fy), and

the security feature (4) being assessed as authentic if the reading algorithm decrypts at least one further graphical code (2, 3) and

the security feature (4) being assessed as non-authentic if the reading algorithm does not decrypt any further code (2, 3).

**16.** Method according to Claim 15, **characterized in that** a second code (2) and a third code (3), which lies in a higher frequency range of G2(fx,fy) than code (2), are decrypted and the security feature (4) is assigned a greater security if the third code (3) is decrypted than if only the second code (2) is decrypted.

**17.** Method according to either of Claims 15 and 16, **characterized in that** information about a terminal used for the authentication method is ascertained and **in that** the conditions for the assessment of the security feature (4) as authentic are determined on the basis of the information.

**18.** Method according to any one of Claims 15 to 17, **characterized in that** information about the circumstances of the authentication are ascertained and **in that** the conditions for the assessment of the security feature (4) as authentic are determined on the basis of the information.

**19.** Method according to any one of Claims 15 to 18, **characterized in that** data ascertained during the authentication method are stored in the database and able to be used for classifying security features (4) in a subsequent method.

**20.** Method according to any one of Claims 15 to 19, **characterized in that** first information items from decoding the open first graphical code (1) are used for decoding the further graphical codes (2, 3).

**21.** Method according to any one of Claims 15 to 20, **characterized in that** the Fourier transform g(x,y) is provided with an inverse phase key and then subjected to an inverse Fourier transform.

**22.** Method according to any one of Claims 15 to 21, **characterized in that** the Fourier transform g(x,y) is descrambled and then subject to an inverse Fourier transform.

**23.** Method according to Claim 15, **characterized in that** at least one image of the security feature (4) is evaluated by a machine,

wherein the security feature (4) contains a concealed, machine-readable, graphical code (2), the authentication is performed by means of an Internet-capable, mobile terminal with an integrated camera, by means of which the at least one image of the security feature (4) is recorded, a program for instructing a user of the mobile terminal and for machine evaluation of the image recordings is stored on a web server,

the program is subdivided into processing steps which are performed on the web server and processing steps which are performed on the mobile terminal, an Internet connection is established between the mobile terminal and the web server by way of a website and the corresponding program part is loaded onto the mobile terminal via the website, and

the program is performed in an Internet browser on the mobile terminal,

**characterized in that**

the program part executed on the mobile terminal performs a Fourier transform of the image or of a part of the image and

the program part executed on the mobile terminal performs a decryption of further machine-readable codes (2, 3) from a Fourier transform of the image or of a part of the image.

**24.** Method according to Claim 15 or 23, **characterized in that** the security feature (4) contains an open, machine-readable, first graphical code (1), which comprises a URL of a website, by means of which a connection to the web server is established.

**25.** Method according to Claim 15 or 24, **characterized in that** the security feature (4) is printed.

**26.** Security feature with a printed, two-dimensional, binarized image which comprises a first image of an open, machine-readable, first graphical code which is linked to a second binarized image which is calculated by binarization from a function g(x,y) which is the Fourier transform of a two-dimensional, discrete, complex function G(fx,fy) with an fx-frequency coordinate and an fy-frequency coordinate, in which at least one further machine-readable graphical code (2, 3) is embedded, wherein a maximum used frequency fx_max, fy_max and a maximum achievable frequency fx_limit, fy_limit are respectively provided along both frequency coordinates fx, fy, **characterized in that**

a ratio $Pfx = \dfrac{fx\_max}{fx\_limit}$,

$Pfy = \dfrac{fy\_max}{fy\_limit}$ of maximum used frequency and maximum achievable frequency is determined along each coordinate and

the binarized image is printed with a pixel resolution of at least the smaller value of the two values

$\dfrac{300 DPI}{Pfx}$, $\dfrac{300 DPI}{Pfy}$.

27. Security feature according to Claim 26, **characterized in that** the linked image is printed with a pixel resolution of at least the smaller value

of $\dfrac{450 DPI}{Pfx}$, $\dfrac{450 DPI}{Pfy}$.

28. Security feature according to Claim 26 or 27, **characterized in that** the first image is ANDed with the second image.

29. Series of security features according to any one of Claims 26, 27 and 28, **characterized in that** the graphical code of each security feature has a serialised information item.

## Revendications

1. Procédé de création d'une caractéristique de sécurité (4), selon lequel
une première information est mise à disposition sous la forme d'un premier code graphique (1) ouvert lisible par machine,
le premier code graphique (1) est mis à disposition sous la forme d'une première image,
au moins une information supplémentaire est mise à disposition dans au moins un code graphique supplémentaire (2, 3) lisible par machine,
l'au moins un code graphique supplémentaire (2, 3) est incorporé dans une fonction complexe G(fx,fy) bidimensionnelle discrète avec une coordonnée de fréquence fx et une coordonnée de fréquence fy,
la fonction complexe G(fx,fy) bidimensionnelle discrète est transformée en une fonction complexe g(x,y) bidimensionnelle discrète par transformée de Fourier,
et la fonction g(x,y) est binarisée en une deuxième image et la première image et la deuxième image sont combinées entre elles,
**caractérisé en ce que**
une fréquence maximale utilisée fx_max, fy_max respective et une fréquence maximale atteignable fx_limit, fy_limit respective sont déterminées le long des deux coordonnées de fréquence fx, fy,

un rapport $Pfx = \dfrac{fx\_max}{fx\_limit}$,

$Pfy = \dfrac{fy\_max}{fy\_limit}$ de la fréquence maximale utilisée à la fréquence maximale atteignable est déterminé le long de chaque coordonnée et l'image combinée est imprimée avec une résolution en pixels au moins égale à la plus petite valeur parmi les deux

valeurs $\dfrac{300 DPI}{Pfx}$, $\dfrac{300 DPI}{Pfy}$.

2. Procédé selon la revendication 1, **caractérisé en ce que** la première image est combinée à la deuxième image par une liaison logique ET.

3. Procédé selon la revendication 1 ou 2, **caractérisé en ce que** la fonction G(fx,fy) bidimensionnelle discrète est soumise à une transformée de Fourier et une partie réelle d'une fonction g(x,y) après transformée de Fourier de la fonction G(fx,fy) est identifiée et la partie réelle est ensuite binarisée.

4. Procédé selon l'une des revendications précédentes, **caractérisé en ce que** les codes supplémentaires (2, 3), considérés individuellement, sont pourvus de valeurs fx_max et fy_max différentes.

5. Procédé selon l'une des revendications précédentes, **caractérisé en ce que** l'image combinée est imprimée avec une résolution en pixels au moins égale à la plus petite valeur parmi $\dfrac{450 DPI}{Pfx}$, $\dfrac{450 DPI}{Pfy}$.

6. Procédé selon l'une des revendications précédentes, **caractérisé en ce que** la binarisation est effectuée en utilisant une valeur de seuil qui est adaptée au processus d'impression.

7. Procédé selon l'une des revendications précédentes, **caractérisé en ce que** la binarisation est effectuée en utilisant une valeur de seuil qui génère une image binarisée avec 50-75 % de pixels blancs et 25-50 % de pixels noirs.

8. Procédé selon l'une des revendications précédentes,

**caractérisé en ce qu'**une clé de phase est ajoutée à la fonction g(x,y) après transformée de Fourier et la clé de phase est mémorisée.

9. Procédé selon l'une des revendications précédentes,
   **caractérisé en ce que** des zones et/ou des pixels individuels de la fonction g(x,y) après transformée de Fourier sont brouillés entre eux et le brouillage est mémorisé.

10. Procédé selon l'une des revendications précédentes,
    **caractérisé en ce que** l'image combinée est imprimée sous forme numérique.

11. Procédé selon l'une des revendications précédentes,
    **caractérisé en ce que** l'image binarisée (2) n'est pas imprimée en noir, gris, cyan, magenta ou jaune.

12. Procédé de création d'une série de caractéristiques de sécurité respectivement selon l'une des revendications précédentes, **caractérisé en ce qu'**une information sérialisée est associée à chacune des caractéristiques de sécurité.

13. Procédé selon la revendication 12, **caractérisé en ce que** le premier code (1) est pourvu d'une URL et d'une information sérialisée.

14. Procédé selon l'une des revendications 12 et 13, **caractérisé en ce que** le code supplémentaire (2, 3) est pourvu d'une information sérialisée.

15. Procédé d'authentification d'une caractéristique de sécurité (4) créée conformément à un procédé selon la revendication 1, comprenant un premier code graphique (1) ouvert lisible par machine et une image binarisée combinée avec celui-ci, selon lequel
    une image électronique de la caractéristique de sécurité (4) est enregistrée,
    le premier code graphique (1) ouvert lisible par machine est décodé,
    l'image binarisée combinée ou une portion de cette image est incorporée dans une fonction complexe g2(x,y),
    la fonction complexe g2(x,y) est transformée en une fonction complexe G2(fx,fy) par transformée de Fourier et un algorithme de lecture est appliqué sur la fonction complexe G2(fx,fy), et
    la caractéristique de sécurité (4) est évaluée comme étant authentique si l'algorithme de lecture décrypte au moins un code graphique supplémentaire (2, 3), et
    la caractéristique de sécurité (4) est évaluée comme étant non authentique si l'algorithme de lecture ne décrypte aucun code graphique supplémentaire (2, 3).

16. Procédé selon la revendication 15, **caractérisé en ce qu'**un deuxième code (2) et un troisième code (3), lequel se trouve dans une plage de fréquence plus élevée de G2(fx,fy) que le code (2), sont décryptés et une sécurité plus élevée est attribuée à la caractéristique de sécurité (4) lorsque le troisième code (3) est décrypté que lorsque seul le deuxième code (2) est décrypté.

17. Procédé selon l'une des revendications 15 et 16, **caractérisé en ce que** des informations à propos d'un terminal utilisé pour le procédé d'authentification sont identifiées et **en ce que** les conditions pour l'évaluation de la caractéristique de sécurité (4) comme étant authentique sont déterminées en fonction des informations.

18. Procédé selon l'une des revendications 15 à 17, **caractérisé en ce que** des informations à propos des circonstances de l'authentification sont identifiées et **en ce que** les conditions pour l'évaluation de la caractéristique de sécurité (4) comme étant authentique sont déterminées en fonction des informations.

19. Procédé selon l'une des revendications 15 à 18, **caractérisé en ce que** les données identifiées pendant le procédé d'authentification sont mémorisées dans la base de données et peuvent être utilisées dans un procédé ultérieur pour la classification de caractéristiques de sécurité (4).

20. Procédé selon l'une des revendications 15 à 19, **caractérisé en ce que** des premières informations issues d'un décodage du premier code graphique (1) ouvert sont utilisées pour un décodage du code graphique supplémentaire (2, 3).

21. Procédé selon l'une des revendications 15 à 20, **caractérisé en ce que** la fonction g(x,y) après transformée de Fourier est pourvue d'une clé de phase et ensuite soumise à une transformée de Fourier inverse.

22. Procédé selon l'une des revendications 15 à 21, **caractérisé en ce que** la fonction g(x,y) après transformée de Fourier est désembrouillée et ensuite soumise à une transformée de Fourier inverse.

23. Procédé selon la revendication 15, **caractérisé en ce que**
    au moins une image de la caractéristique de sécurité (4) est interprétée par machine, la caractéristique de sécurité (4) contenant un code graphique (2) caché lisible par machine,
    l'authentification est effectuée au moyen d'un terminal mobile connecté à l'Internet comprenant une caméra intégrée avec laquelle est enregistrée l'au moins une image de la caractéristique de sécurité (4),

un programme délivrant des instructions d'utilisation à un opérateur du terminal mobile et destiné à l'interprétation des images enregistrées est stocké sur un serveur Web, le programme est divisé en étapes de traitement qui sont exécutées sur le serveur Web et divisé en étapes de traitement qui sont exécutées sur le terminal mobile,

une connexion Internet entre le terminal mobile et le serveur Web est établie par le biais d'un site Web et la partie de programme correspondante est chargée sur le terminal mobile par le biais du site Web,

le programme est exécuté dans un navigateur Internet du terminal mobile,

**caractérisé en ce que**

la partie de programme exécutée sur le terminal mobile réalise une transformée de Fourier de l'image ou d'une partie de l'image et

la partie de programme exécutée sur le terminal mobile réalise un décryptage de codes supplémentaires (2, 3) lisibles par machine à partir d'une transformée de Fourier de l'image ou d'une partie de l'image.

24. Procédé selon la revendication 15 ou 23, **caractérisé en ce que** la caractéristique de sécurité (4) contient un premier code graphique (1) ouvert lisible par machine qui comporte une URL vers un site Web par le biais duquel est établie une connexion avec le serveur Web.

25. Procédé selon la revendication 15 ou 24, **caractérisé en ce que** la caractéristique de sécurité (4) est imprimée.

26. Caractéristique de sécurité comprenant une image imprimée bidimensionnelle binarisée, qui comporte une première image d'un premier code graphique (1) ouvert lisible par machine, qui est combinée avec une deuxième image binarisée, laquelle est calculée par binarisation à partir d'une fonction g(x,y) qui est la transformée de Fourier d'une fonction complexe G(fx,fy) bidimensionnelle discrète avec une coordonnée de fréquence fx et une coordonnée de fréquence fy, dans laquelle est incorporé au moins un code graphique supplémentaire (2, 3) lisible par machine, une fréquence maximale utilisée fx_max, fy_max respective et une fréquence maximale atteignable fx_limit, fy_limit respective étant respectivement prévues le long des deux coordonnées de fréquence fx, fy,

**caractérisée en ce que**

un rapport $Pfx = \dfrac{fx\_max}{fx\_limit}$,

$Pfy = \dfrac{fy\_max}{fy\_limit}$ de la fréquence maximale utilisée à la fréquence maximale atteignable est déterminé le long de chaque coordonnée et l'image binarisée est imprimée avec une résolution en pixels au moins égale à la plus petite valeur parmi les deux valeurs $\dfrac{300\,DPI}{Pfx}$, $\dfrac{300\,DPI}{Pfy}$.

27. Caractéristique de sécurité selon la revendication 26, **caractérisée en ce que** l'image combinée est imprimée avec une résolution en pixels au moins égale à la plus petite valeur parmi $\dfrac{450\,DPI}{Pfx}$, $\dfrac{450\,DPI}{Pfy}$.

28. Caractéristique de sécurité selon la revendication 26 ou 27, **caractérisée en ce que** la première image est combinée à la deuxième image par une liaison logique ET.

29. Série de caractéristiques de sécurité selon l'une des revendications 26, 27 ou 28, **caractérisée en ce que** le code graphique de chaque caractéristique de sécurité possède une information sérialisée.

Fig. 1

Fig. 2a

Fig. 2b

Fig. 3a

Fig. 3b

Fig. 4a

Fig. 4b

Fig. 5a

Fig. 5b

Fig. 6a

Fig. 6b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19806295 A1
- US 20100060944 A1

- DE 102014018865 A1

**In der Beschreibung aufgeführte Nicht-Patentliteratur**

- **GOODMAN, J. W.** Introduction to Fourier Optics. Mc-Graw-Hill, 1996